# EUROPEAN PATENT SPECIFICATION

(11) **EP 4 438 234 B1**
(45) Date of publication and mention of the grant of the patent: **10.12.2025**
(21) Application number: 24163007.8
(22) Date of filing: 12.03.2024
(51) Int. Cl.: B25F 5/00

(54) **SPEED RAMP-UP CONTROL METHOD IN POWER TOOL, POWER TOOL AND SYSTEM**
GESCHWINDIGKEITSAUFRAMPENSTEUERUNG IN EINEM ELEKTROWERKZEUG, ELEKTROWERKZEUG UND SYSTEM
METHODE D'ACCÉLÉRATION DE VITESSE DANS UN OUTIL ÉLECTRIQUE, OUTIL ET SYTÈME CORRESPONDANT

(30) Priority: 30.03.2023 US 202363493078 P
(43) Date of publication of application: 02.10.2024
(73) Proprietor: Black & Decker, Inc., New Britain, CT 06053 (US)
(72) Inventor: TIAN Jr., Yue, Suzhou, 215008 (CN); DAI, Shasha, Suzhou, 215131 (CN); TAO, Perry, Suzhou, 215000 (CN); KUNZ, Eric L., Shrewsbury, 17361 (US); FRIEDMAN, Brian E., Parkton, 21120 (US)
(74) Representative: SBD IPAdmin

(56) References cited:
- US-A1- 2012 247 796
- US-A1- 2021 091 686
- US-B2- 10 411 558

## Description

### RELATED APPLICATION

This application claims the benefit of US Provisional Patent Application No. 63/493,078, filed March 30, 2023.

### FIELD

This application relates to a power tool, and in particular, to speed-ramp up control mechanism in a power tool capable of receiving battery packs of different capacities.

US 10 411 558 B2 shows the preamble of claim 1 and of claim 8.

Other examples are known from US 2021/091686 A1 and from US 2012/247796 A1.

### SUMMARY

According to an embodiment, a method of operating a power tool having a motor and a controller during a start-up period of the power tool is provided, the start-up period having a plurality of intervals, the power tool receiving electric power from a removable battery pack. The method comprises: initializing a current clipping threshold to a baseline value; applying the current clipping threshold to the electrical current drawn by the power tool from the battery pack during a first interval of the plurality of intervals; and gradually increasing the current clipping threshold over subsequent intervals of the plurality of intervals to control a ramp-up curve of the rotational speed of the motor.

In an embodiment, the power tool is configured to exhibit substantially similar speed ramp-up curve when powered by a first battery pack as it would when powered by a second battery pack, wherein the second battery pack has a higher electrical capacity than the first battery pack.

In an embodiment, the second battery pack has a higher number of parallel connections between its battery cells than does the first battery pack.

In an embodiment, the current clipping threshold is incremented as a function of time.

In an embodiment, the current clipping threshold is incremented in closed-loop and as a function of the rotational speed of the motor.

In an embodiment, the current clipping threshold is controlled over the plurality of intervals such that a current-time curve of the electrical current does not exceed a shutdown current threshold of the power tool.

In an embodiment, the current clipping threshold is controller over the plurality of intervals such that a voltage-time curve of an electric voltage of the battery pack does not fall below an undervoltage threshold of the battery pack.

In an embodiment, a power tool is provided that is capable of operating with a first battery pack or a second battery pack having a higher electrical capacity than the first battery pack, the power tool comprising: a housing; an electric motor disposed within the housing; a battery receiving portion on the housing configured to removably receive one of the first battery pack or the second battery pack; an inverter circuit disposed between the battery receiving portion and the electric motor; and a controller configured to control a switching operation of the inverter circuit to control supply of electric power to the electric motor. During a power tool start-up period having a plurality of intervals, the controller is configured to: initialize a current clipping threshold to a baseline value; apply the current clipping threshold to the electrical current drawn by the power tool from the battery pack during a first interval of the plurality of intervals; and gradually increase the current clipping threshold over subsequent intervals of the plurality of intervals to control a ramp-up curve of the rotational speed of the motor.

In an embodiment, the controller is configured to control the current clipping threshold over the plurality of intervals such that a current-time curve of the electrical current does not exceed a shutdown current threshold of the power tool.

In an embodiment, the controller is configured to control the current clipping threshold over the plurality of intervals such that a voltage-time curve of an electric voltage of the battery pack does not fall below an undervoltage threshold of the battery pack.

In an embodiment, a power tool system is provided comprising the abovementioned power tool, first battery pack and second battery pack.

### BRIEF DESCRIPTION OF THE DRAWINGS

Example embodiments of the present invention will become more fully understood from the detailed description given herein below and the accompanying drawings, wherein like elements are represented by like reference numerals, which are given by way of illustration only and thus are not limitative of the example embodiments of the present invention.
FIG. 1 depicts a perspective view of an electric power tool, according to an embodiment;
FIG. 2 depicts a side view of the electric power tool with a housing half removed to expose an outer-rotor brushless motor therein, according to an embodiment;
Fig. 3 depicts a side perspective view of the motor, according to an embodiment;
Fig. 4 depicts a side exploded view of the motor, according to an embodiment;
Fig. 5 depicts a side cross-sectional view of the motor, according to an embodiment;
Fig. 6 depicts a circuit block diagram of power tool including the motor and an electronic control module, according to an embodiment;
Fig. 7 depicts an exemplary power switch circuit including power switches configured as a three-phase inverter bridge circuit, according to an embodiment;
FIG. 8 depicts an exemplary waveform diagram of a pulse-width modulation (PWM) drive sequence of the three-phase inverter bridge circuit of the power switch circuit within a full 360 degree conduction cycle, according to an embodiment;
FIG. 9 is a view of a set of exemplary power tools receiving different capacity battery packs, according to an embodiment;
FIGs. 10A-10C depict circuit diagrams of different capacity battery packs, respectively, according to an embodiment;
Fig. 11 depicts an exemplary current-time curve of the power tool during a start-up period when powered by a low-capacity battery pack, according to an embodiment;
Fig. 12 depicts an exemplary current-time curve of the power tool during the start-up period when powered by a high-capacity battery pack, according to an embodiment;
Fig. 13 depicts an improved current-time curve of the power tool 10 during the start-up period when powered by a high-capacity battery pack using an improved speed ramp control scheme of the invention, according to an embodiment;
Figs 14A and 14B respectively depict an exemplary current-time curve and a corresponding exemplary voltage-time curve of the power tool during the start-up period when powered by a low-capacity battery pack, according to an embodiment;
Figs. 15A and 15B respectively depict an improved current-time curve and a corresponding improved voltage-time curve 36 of the power tool during the start-up period when powered by the low-capacity battery pack using the improved speed ramp control scheme, according to an embodiment;
Fig. 16 depicts an exemplary flow diagram for speed ramp control during the start-up period, according to an embodiment;
Fig. 17 depicts an exemplary flow diagram for speed ramp control during the start-up period, according to another embodiment;
Fig. 18 depicts a speed-time diagram showing a speed curve achieved using the improved speed ramp control scheme of the invention during the start-up period when using a high capacity battery pack, according to an embodiment.

### DESCRIPTION

It is to be understood that both the foregoing general description and the following detailed description are exemplary and explanatory only and are intended to provide an explanation of various embodiments of the present teachings.

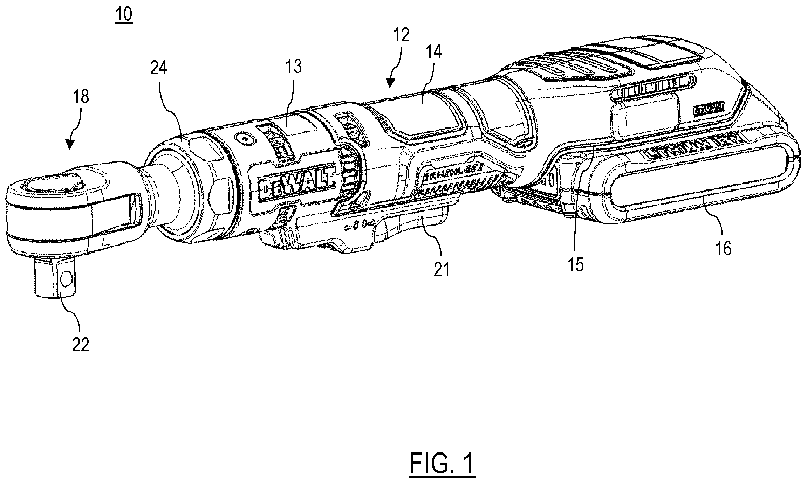

Referring to FIGs. 1-2, an electric power tool 10 is briefly described herein, according to an embodiment. In an embodiment, power tool 10, which in this exemplary embodiment is an electric ratchet wrench for applying torque to a fastener, includes a housing 12 formed by two clam shells. The housing 12 is elongated along a longitudinal axis and includes a motor case 13 within which an electric brushless motor 100 is disposed, a handle portion 14 extending rearwardly from the motor case 13 within which a control and/or power module 20 are supported, and a battery receiving portion 15 disposed at a rear end of the handle portion 14.

The control and/or power module 20 is thus disposed between the battery receiving portion 15 and the motor 100. In an embodiment, the control and/or power module 20 includes control and switching components, for example an inverter switch circuit controlled by a programable controller, that controls flow of electric current to the motor 100. In an embodiment, a trigger assembly 19 is mounted on the handle portion 14 of the housing 12 that electrically communicates with the control and/or switch module 20. In an embodiment, the trigger assembly 19 includes a trigger switch 21 engageable by a user. Actuation of the trigger switch 21 sends a signal to the controller to begin operating the motor 100.

In an embodiment, the battery receiving portion 15 is configured to receive and lock in a sliding battery pack 16, such as a 20V Max power tool battery pack. In an embodiment, the battery receiving portion 15 allows the battery pack 16 to be received along a sliding axis that is substantially parallel to the longitudinal axis of the housing 12. This ensures that the battery pack 16 is contained within approximately an envelope of the housing 12. In an embodiment, when viewed from a side, the total width D1 of the battery receiving portion 15 plus the battery pack 16 is between approximately 25% to 40% greater than a width D2 of the motor case formed around the motor 100, and between approximately 15% to 25% greater than a width D3 formed by the trigger switch 21 and the handle portion 14.

In an embodiment, a ratchet head 18 is mounted on a front end of the housing 12 forward of the motor case 13. In an embodiment, motor 100 is orientated along the longitudinal axis of the housing 12 to provide a rotary output to the ratchet head 18 to drive an output member 22. In an embodiment, as described later in detail, a nut 24 is mounted at the end of the housing 12 to secure the ratchet head 18 to the motor 100.

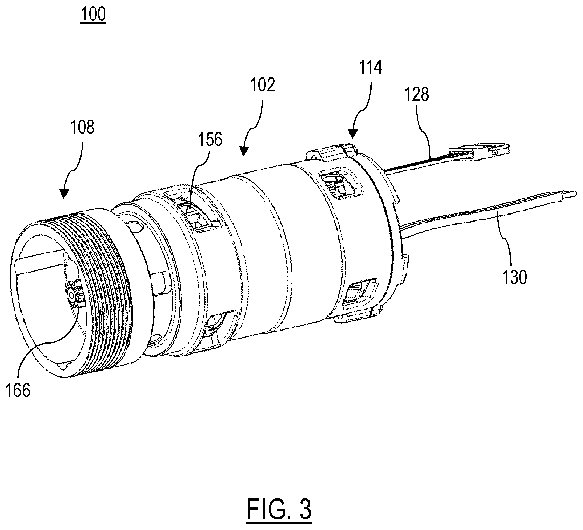

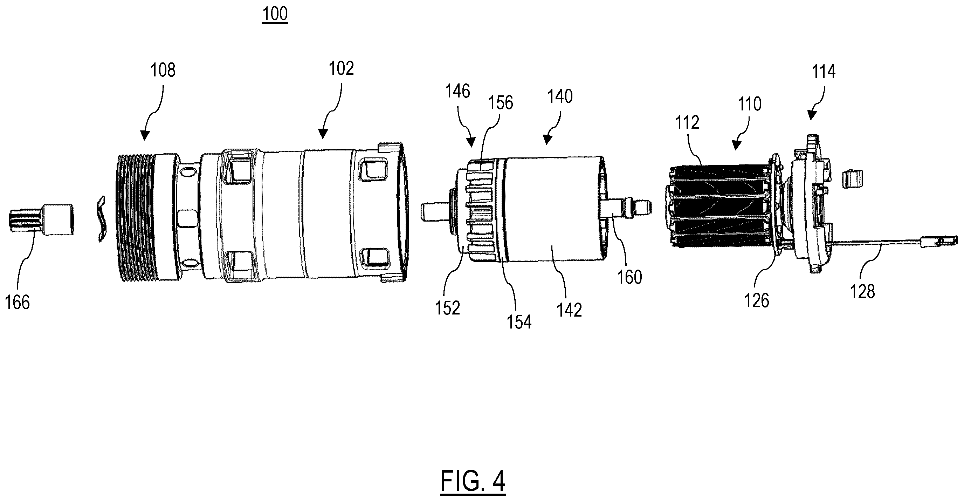

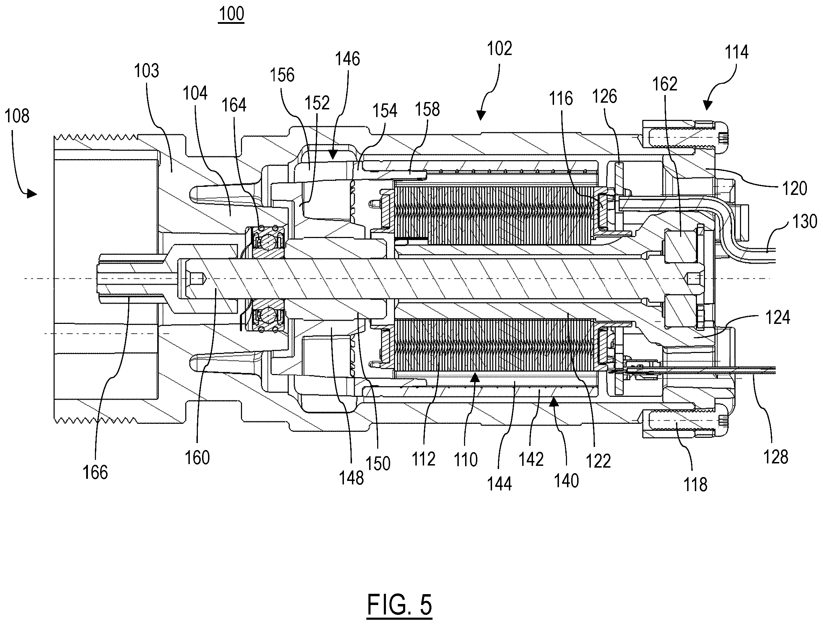

Fig. 3 depicts a side perspective view of the motor 100, according to an embodiment. Fig. 4 depicts a side exploded view of the motor 100, according to an embodiment. Fig. 5 depicts a side cross-sectional view of the motor 100, according to an embodiment.

As shown in these figures, motor 100 is an outer-rotor brushless (BLDC) motor 100 contained in a motor can (or motor housing) 102. In an embodiment, motor 100 includes an inner stator assembly 110 disposed within an outer rotor assembly 140, according to an embodiment.

In an embodiment, stator assembly 110 includes a stator lamination stack 112 formed by a series of steel laminations. The stator lamination stack 112 is mounted on a stator mount 114 and supports a series of stator windings 116. In an exemplary embodiment, the stator windings 116 are wound in three phases, which, when respectively energized by the control and/or power module 20, cause rotation of the rotor assembly 140. Further, in an embodiment, a set of power wires 130 are received through the stator mount 114 and coupled to the stator windings 116.

In an embodiment, the stator mount 114 includes an elongated cylindrical portion 122 sized to be received securely within a central aperture of the stator lamination stack 112. In an embodiment, the stator lamination stack 112 may be press-fitted over the cylindrical portion 122 of the stator mount 114. In an embodiment, stator mount 114 further includes a radial body 120 at an end of the cylindrical portion 122 outside the body of the stator lamination stack 112. The radial body 120 forms a center bearing support pocket 124, which as described below, securely receives a rear bearing 162 of the rotor assembly 140.

In an embodiment, a positional sensor board 126 is mounted on an end of the stator lamination stack 112, between the stator lamination stack 112 and the stator mount 114. In an embodiment, the positional sensor board 126 includes a series of Hall sensors positioned for sensing a rotary position of the rotor assembly 140. A set of signal wires 128 are secured to the positional sensor board 126 to carry signals from the Hall sensors to the control and/or power module 20.

In an embodiment, rotor assembly 140 includes a cylindrical rotor core 142 formed around the stator assembly 110, and a series of permanent magnets 144 surface-mounted on the inner surface of the rotor core 142 facing the stator assembly 110 with a small airgap therebetween. As the stator windings 116 are energized in a controlled pattern, they magnetically interact with permanent magnets 144, thus causing the rotation of the rotor. In an embodiment, the rotor assembly 140 mounted securely on a rotor shaft 160 via a rotor mount 146. Rotation of the rotor assembly 140 causes rotation of the rotor shaft 160. A pinion 166 is mounted on a front end of the rotor shaft 160 for coupling the rotor shaft 160 to gear components (not shown) of the ratchet head 18.

In an embodiment, rotor mount 146 includes an inner body 148 that is substantially cylindrical and is mounted on the rotor shaft 160 via a bushing 150. The rotor mount 146 further includes a radial body 152 extending from the inner body 148 and an outer ring 154 that is securely coupled to the end of the rotor core 142 via a lip 158 shaped to be form-fittingly received through the end of the rotor core 143. A fan 156 is formed by a series of spaced-apart fan blades extending between the radial body 152 and the outer ring 154. As the rotor assembly 140 is rotated, the fan 156 generates an airflow through the stator assembly 110 and the rotor assembly 140.

US Patent Application No. 17/125,031 filed December 17, 2020, provides further detail on the features described above and is referenced for further detail.

In an embodiment, motor can 102 includes a generally cylindrical body having two open ends. The stator assembly 110 and rotor assembly 140 are received within the motor can 102, with an air gap maintained between the rotor core 142 and the inner surface of the motor can 102.

In an embodiment, the stator mount 114 is secured to one end of the motor can 102 via a set of fasteners 118. Since the cylindrical portion 122 of the stator mount 114 supports the stator assembly 110, the stator mount 114 provides structural support for the stator assembly 110 relative to the motor can 102.

In an embodiment, the rotor mount 146 is received within the motor can 102 along with the rotor assembly 140. The motor can 102 includes a radial wall 103 that projects inwardly and forms a bearing support pocket 104 adjacent the rotor mount 146. The bearing support pocket 104 receives a front bearing 164 of the rotor shaft 160. Further, since the bearing support pocket 124 of the stator mount 114 supports the rear bearing 162, the stator mount 114 and the motor can 102 cooperatively provides structural support for the rotor assembly 140 to be freely rotatably within the motor can 102. In an embodiment, the rotor shaft 160 extends through the bearing support pocket 104. The pinion 166, which is coupled to the end of the rotor shaft 160, is provided within the front portion 108 of the motor can 102.

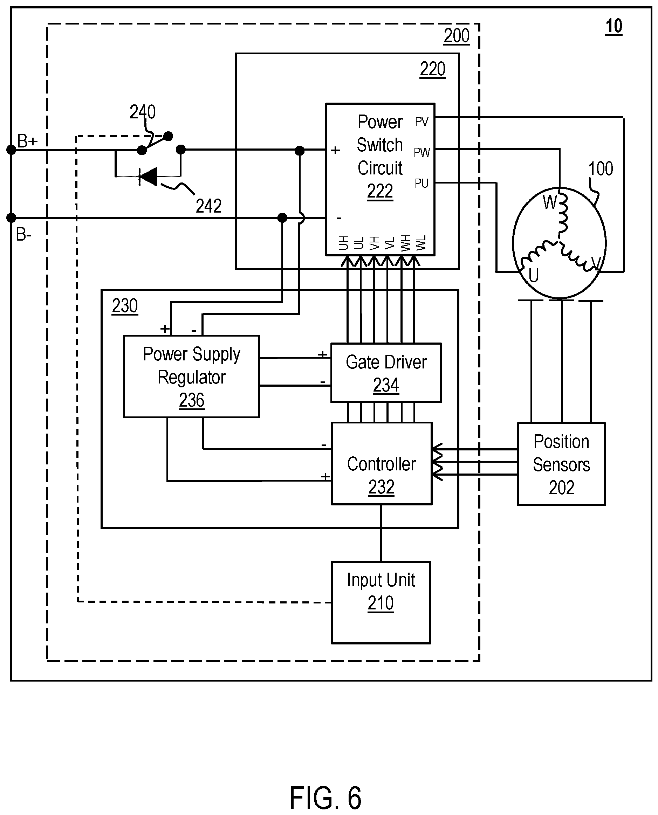

Referring to Fig. 6, a circuit block diagram of power tool 10 including the motor 100 and an electronic control module 200 is depicted, according to an embodiment.

In an embodiment, electronic control module 200 includes an input unit 210, a power unit 220, and a control unit 230. In some embodiments, electronic control module 200 may integrally include components and circuitry associated with the user-actuated input unit 210, power unit 220, and the control unit 230 on a single circuit board or across multiple interconnected circuit boards.

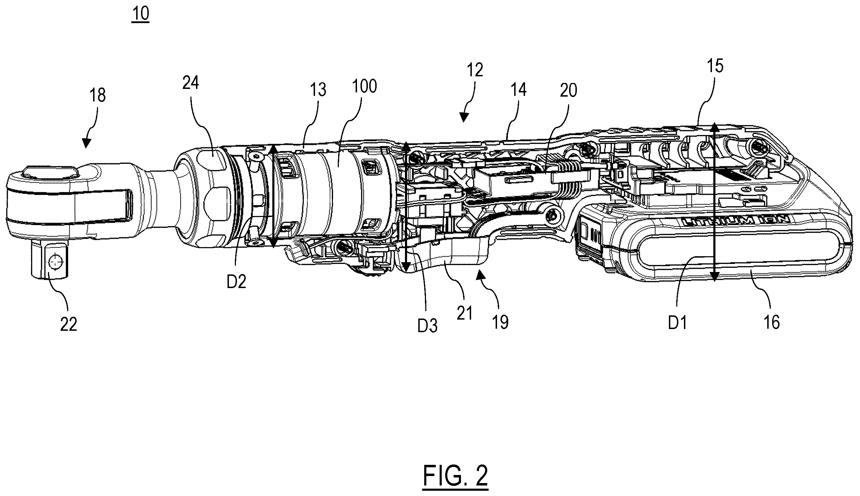

In an embodiment, input unit 210 may correspond to, or be provided as a part of, in or communication with, the trigger assembly 19 shown in Figs. 1 and 2. The input unit 210 provides a voltage input corresponding to the actuation of the trigger switch 21. In variable-speed power tools, the voltage input may be a variable-voltage analog signal that corresponds to the amount of travel distance of the trigger switch 21.

In an embodiment, power unit 220 may include a power switch circuit 222 coupled between the B+/B- terminals of the power source (e.g., the battery pack 16) and motor (e.g., power wires 130, which are coupled to motor windings 116) to drive BLDC motor 100. In an embodiment, power switch circuit 222 may be a three-phase bridge driver circuit including six controllable semiconductor power devices (e.g. FETs, BJTs, IGBTs, etc.).

In an embodiment, control unit 230 may include a controller 232, a gate driver 234, and a power supply regulator 234. In an embodiment, controller 232 is a programmable device arranged to control a switching operation of the power devices in power switching circuit 222. In an embodiment, controller 232 is activated by the input unit 210 upon the initial actuation of the trigger switch 21. In an embodiment, controller 232 receives rotor rotational position signals from a set of position sensors 202 (e.g., positional sensor board 126) provided in close proximity to the rotor 110. In an embodiment, position sensors 202 may be Hall sensors. It should be noted, however, that other types of positional sensors may be alternatively utilized. Based on the rotor rotational position signals from the position sensors 203 and the variable voltage signal from the input unit 210, controller 232 outputs drive signals UH, VH, WH, UL, VL, and WL through the gate driver 234, which provides a voltage level needed to drive the gates of the semiconductor switches within the power switch circuit 222 in order to control a pulse-width modulation (PWM) switching operation of the power switch circuit 222.

In an embodiment, power supply regulator 236 may include one or more voltage regulators to step down the power supply to a voltage level compatible for operating the controller 232 and/or the gate driver 234. In an embodiment, power supply regulator 236 may include a buck converter and/or a linear regulator to reduce the power voltage of battery down to, for example, 15V for powering the gate driver 234, and down to, for example, 3.2V for powering the controller 232.

In an embodiment, electronic control module 200 is provided with a power contact switch 240 and a flyback diode 242 disposed in parallel to the power contact switch 240. Power contact switch 240 is a contact ON/OFF switch coupled to the input unit 210.

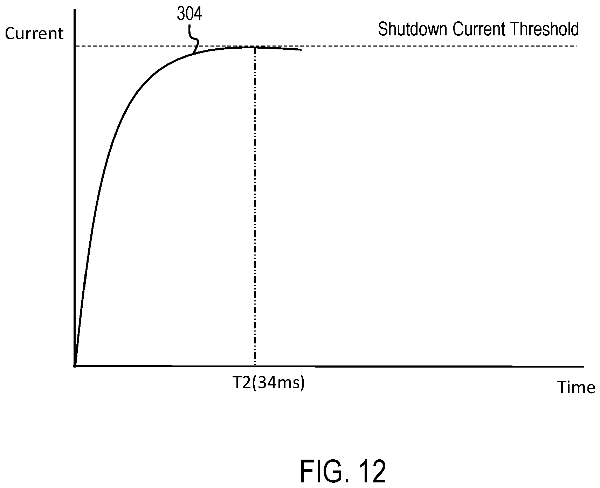

In an embodiment, the input unit 210 may detect a movement of the trigger switch 21 and initiate a signal to turn on the controller and other components of electronic control module 200. In an example, as described in US Patent No. 9,508,498, electronic control module 200 may include a series of conductive pads coupled to a series of resistors that output various voltages based on the position of a wiper coupled to the trigger switch. Upon initial engagement of the trigger switch, the output voltage signal (referred to as the WIPER signal in Fig. 12 of the '498 patent, and as the switch signal hereinafter) exhibits a prescribed change in voltage that, though associated circuitry, couples the controller to battery power supply and turns the controller on.

In an embodiment, the switch signal may be active high, meaning that a high voltage signal is generated on the switch signal when the trigger is pressed. Alternatively, and consistent with Fig. 12 of the '498 patent discussed above, the switch signal may be active low, meaning that the voltage signal on Switch Signal is normally a high voltage (e.g., equivalent to the battery voltage), that changes to a lower voltage amount when the trigger is pressed.

In an embodiment, as the trigger switch 21 is pressed, the output voltage signal from the conductive pads varies in correspondence to the amount of trigger pull. This controller 232 monitors the output voltage signal and determines the target speed of the motor 100 accordingly. The controller 232 controls the speed of the motor 100 by setting a duty cycle of the PWM of the power witch circuit 205 as a function of the target speed. This is typically done via a look-up table, where the trigger position is designated 10 discrete values ranging from the initial trigger position (1) to maximum trigger position (10), and PWM duty cycle is set incrementally as a function of the trigger position between 0% at the initial trigger position to 100% at the maximum trigger position. In an embodiment, additionally and or alternatively, the controller 218 may vary the conduction angle (i.e., conduction band) of the phases of the motor 104 in accordance with the trigger position.

In an embodiment, the speed of the motor 100 is controlled only as a function of the trigger position, in what is commonly known as open-loop speed control. In this scheme, as the increased torque on the motor demands higher current to be drawn from the power supply, the PWM duty cycle and/or the conduction band of the motor 100 is not varied by the controller 232. This causes the output speed to drop as torque increases. Alternatively, the speed of the motor 100 is controlled so as to maintain the target speed even as the torque varies, in what is commonly known as closed-loop speed control.

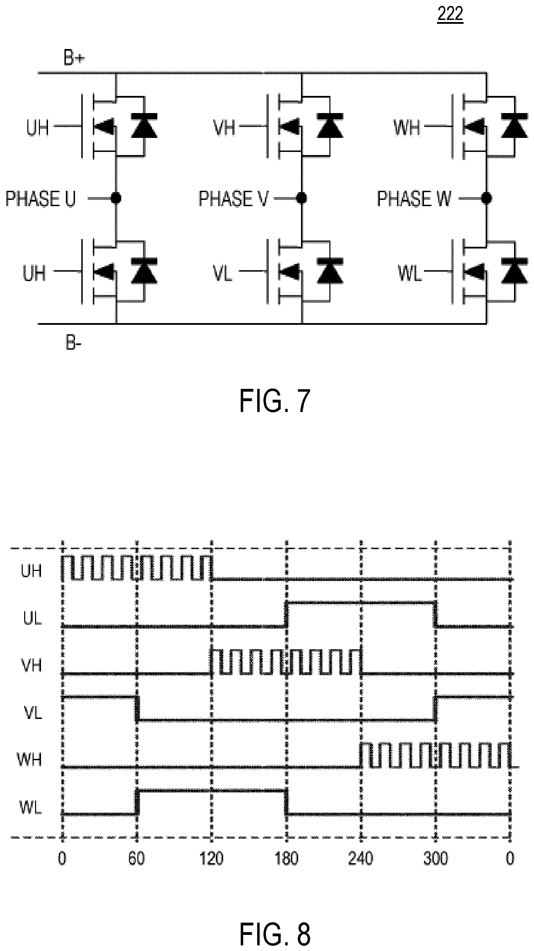

FIG. 7 depicts an exemplary power switch circuit 222 including power switches configured as a three-phase inverter bridge circuit, according to an embodiment. In an example embodiment, the power switch circuit 222 may be a three-phase bridge driver circuit including six controllable semiconductor power switches (e.g., FETs, BJTs, IGBTs, etc.). As shown, the power switches include three high-side FETs and three low-side FETs. The gates of the high-side FETs driven via drive signals UH, VH, and WH, and the gates of the low-side FETs are driven via drive signals UL, VL, and WL, which are controlled by the controller 232 and outputted by the gate driver 234. In an embodiment, the sources of the high-side FETs are coupled to the drains of the low-side FETs to output power signals PU, PV, and PW for driving the BLDC motor 100.

FIG. 8 depicts an exemplary waveform diagram of a pulse-width modulation (PWM) drive sequence of the three-phase inverter bridge circuit of the power switch circuit 222 within a full 360 degree conduction cycle. As shown in this figure, within a full 360° cycle, each of the drive signals associated with the high-side and low-side power switches is activated during a 120° conduction band ("CB"). In this manner, each associated phase of the BLDC 104 motor is energized within a 120° CB by a pulse-width modulated voltage waveform that is controlled by the controller 232 as a function of the desired motor rotational speed. For each phase, UH is pulse-width modulated by the controller 232 within a 120° CB. During the CB of the high-side switch, the corresponding UL is kept low. The UL signal is then activated for a full 120° CB within a half cycle (180°) after the CB associated with the UL signal. The controller 232 controls the amount of voltage provided to the motor, and thus the speed of the motor, via PWM control of the high-side switches. While this figure depicts one exemplary PWM technique at 120° CB, other PWM methods may also be utilized. One such example is PWM control with synchronous rectification, in which the high-side and low-side switch drive signals (e.g., UH and UL) of each phase are PWM-controlled with synchronous rectification within the same 120° CB.

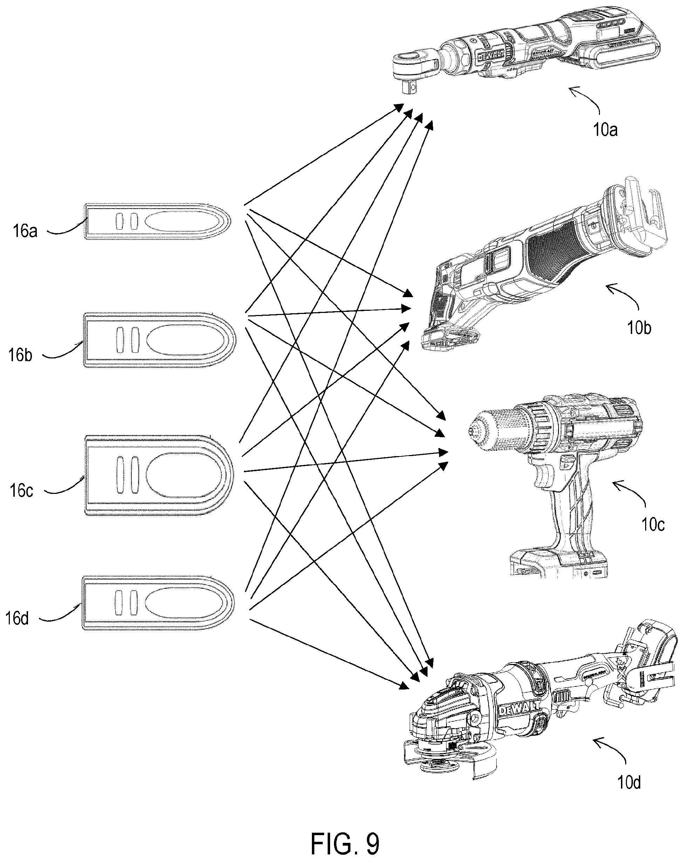

FIG. 9 is a view of a set of exemplary power tools 10a-10d receiving different capacity battery packs 16a-16d, according to an embodiment. In an embodiment, exemplary power tools 10a-10d in this figure include many of the features of power tool 10 described above. In this example, while power tool 10a is a ratchet tool as described in Fig. 1, power tools 10b-10d include other types of power tool such as a reciprocating saw 10b, a drill 10c, and a grinder 10d, respectively. It should be understood, however, that these power tools are provided by way of example, and any other type of power tool, including, but not limited to, an impact tool, a hammer drill, a hammer, a wrench, an oscillator tool, a polisher, a cut-off tool, etc. may be used within this family of tools. Though Fig. 1 depicts one exemplary power tool 10 in detail, as is appreciated by one of ordinary skill in the art, each power tool 10a-10d may include features as shown in Fig. 1 including a housing 12, a trigger switch 21, a motor 100, and a control and/or power module 20. Further, it is appreciated by one of ordinary skill in the art that each exemplary power tool 10a-10d is constructed with a motor control system, an example of which is provided in Fig. 6, including an exemplary electronic control module 200 for controlling the motor 100. In an embodiment, as discussed below, each power tool 10a-10d is provided with a battery receiving portion 15 configured to removably receive any of the battery packs 16a-16d. Further, in an embodiment, at least a subset of the power tools 10a-10d include battery detection and identification mechanisms for identification of the type of battery pack 16a-16d that they are coupled to.

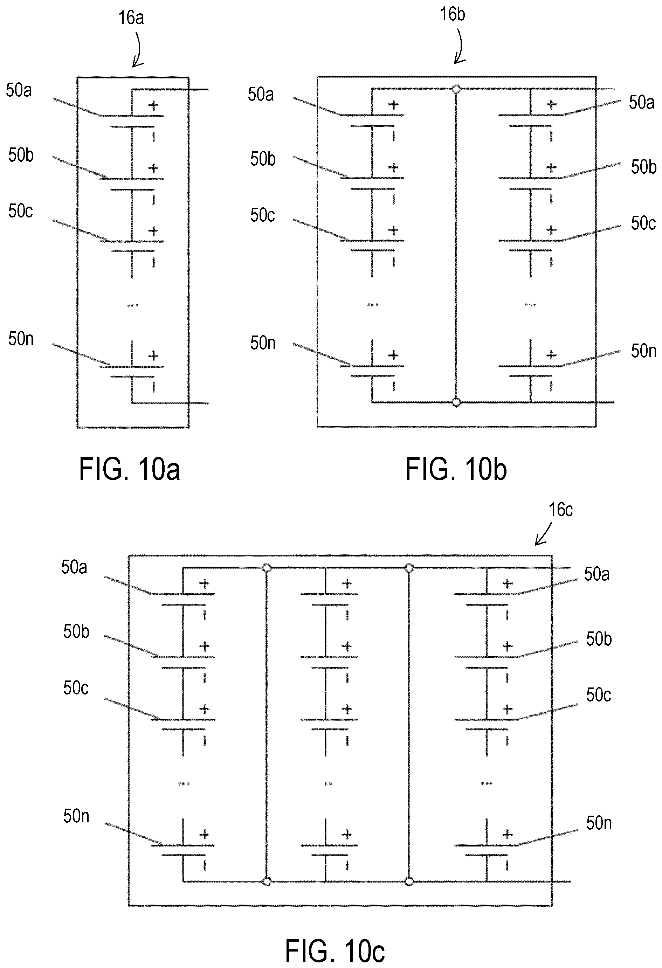

FIGs. 10A-10C depict circuit diagrams of battery packs 50a-50c, respectively, according to an embodiment.

In an embodiment, battery pack 16a is a low-capacity battery pack including a series of battery cells 50a-50n. Each battery cell 50a-50n has a lithium or lithium-ion composition having a maximum rated voltage (e.g., 4V or 4.1V) and a nominal voltage (e.g., 3.8V). The nominal voltage refers to the average state of charge below the maximum voltage within which the cells commonly operate. Low capacity battery pack 16a in this example may include five battery cells 50a-50n in series for a maximum voltage of approximately 20V and a nominal voltage of approximately 18V. In this example implementation, the battery pack 16a may have a capacity of approximately 1.5 to 3.0 Ah depending on the cell impedance.

In an embodiment, battery pack 16b is a medium-capacity battery pack including two rows of cells 50a-50n in parallel. Each row of cells 50a-50n includes the same number of cells as low-capacity battery pack 16a such that medium-capacity battery pack 16b has the same maximum rated voltage (e.g., approximately 20V) and nominal voltage (e.g., approximately 18V) as the low-capacity battery pack 16a. However, the parallel arrangement of the cells increases the capacity of the medium-capacity battery pack 16b to approximately double that of the low-capacity battery pack 16a (e.g., approximately 3.0 to 6.0 Ah), while reducing the battery pack impedance to approximately half the impedance of the low-capacity battery pack 16a.

In an embodiment, battery pack 16c is a high-capacity battery pack including three rows of cells 50a-50n in parallel. Each row of cells 50a-50n includes the same number of cells as low-capacity battery pack 16a such that high-capacity battery pack 16c has the same maximum rated voltage (e.g., approximately 20V) and nominal voltage (e.g., approximately 18V) as the low-capacity battery pack 16a and the medium-capacity battery pack 16c. However, the parallel arrangement of the cells increases the capacity of the high-capacity battery pack 16b to approximately triple that of the low-capacity battery pack 16a (e.g., approximately 4.5 to 9.0 Ah), while reducing the battery pack impedance to approximately 1/3 the impedance of the low-capacity battery pack 108a.

In an embodiment, battery pack 16d (see Fig. 9) includes the same number of parallel rows of cells as battery pack 16b, but with lower impedance battery cells. The cell battery impedance may depend upon several factors, including but not limited to, the cell chemistry, cell diameter, etc. For the purposes of this disclosure, battery pack 16a is considered a high-capacity battery pack with a capacity of approximately 5-8 Ah.

According to embodiments of the invention, battery packs 16a-d include the same rated and nominal voltages and are provided with the same terminal interface for coupling with the family of power tools 10a-10d. However, battery packs 16a-d have different ampere-hour capacities. While low, medium, and high rated capacities in these examples refer to packs with one, two and three rows of battery cells connected in parallel, it should be understood that these configurations are exemplary and battery packs with higher numbers of parallel connections may be utilized. As discussed, battery capacity relates to the number of parallel connections between the battery cells, as well as cell impedance, cell chemistry, etc. It is also noted that the capacity and impedance values provided herein are by way of example and a cell with any impedance level may be incorporated into a battery pack with any number of parallel connections. For example, a 3P battery pack may be provided with very low impedance cells to achieve a capacity of 12Ah, 15Ah, 18Ah.

Power tools commonly execute a speed ramp-up or soft-start algorithm at tool start-up. Soft-start commonly refers to gradual ramp-up of the PWM duty cycle by the power tool controller from zero to the target duty cycle. The ramp-up rate may depend on various factors, including the inertia of the power tool transmission assembly and/or the accessory, type of application, user preference, etc. For example, in a miter saw driving a larger saw blade accessory, the speed ramp up may be set to achieve full no-load speed in one or more seconds. By contrast, in a power tool like a ratchet or an impact driver, the speed ramp up is significantly faster and is designed to achieve full no-load speed in less than 100 ms.

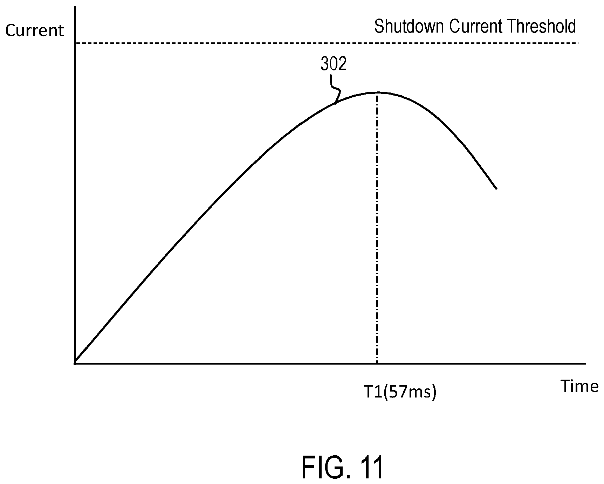

Fig. 11 depicts an exemplary current-time curve 302 of the power tool 10 during a start-up period when powered by a low-capacity battery pack 16a, according to an embodiment. In this example, due to the relative low capacity of the battery pack 16a, the current rises at a steady rate and peaks at a level that is less than a shutdown current threshold of the power tool 10. The shutdown current threshold, in an embodiment, may relate to a maximum current level at which the control electronics (e.g., components of the power switch circuit 222 and/or the control unit 230) can safely operate. Thus, the capacity of battery pack 16a limits the rise in current needed to kickstart the motor and achieve the target rotational speed.

Some power tools have power detection capabilities that allows them to identify the type of battery pack that they are coupled to and adjust the speed ramp-up, among other configurations, accordingly. US Patent No. 11,569,765, which is incorporated herein by reference in its entirety, discloses a power tool and battery pack system in which the power tool identifies a power capacity of the battery pack that it is coupled to, and limits a maximum amount of current that it draws from the battery pack such that the greater a ratio of an impedance of the motor to an impedance of the battery pack, the less the maximum amount of electric current drawn from the battery pack is limited. The power tool may do so by adjusting a current limit of the motor according to the battery capacity, or by adjusting a conduction band of each phase of the motor according to the battery capacity. The power tool is therefore able to customize the speed and current curve according to the capabilities of each battery pack and limitations of the power tool.

In power tools without the aforementioned power detection capabilities and designed to operate with low capacity battery packs, however, it has been discovered that using high capacity battery packs in some instances led to a rapid current rise to tool start-up and inadvertent shut-downs, as discussed here.

Fig. 12 depicts an exemplary current-time curve 304 of the power tool 10 during the start-up period when powered by a high-capacity battery pack 16c or 16d, according to an embodiment. In this example, due to the relative high power capacity of the battery pack, the current rises quickly and peaks at a level that equals or exceeds the shutdown current threshold of the power tool 10. In other words, the power capability and current limit of the electronic control module 200 of the power tool is suitable for use with low or mid capacity battery packs 16a and 16b, but it is outmatched by the power delivery capability of a high capacity battery pack 16c or 16d. In some examples, the electronic control module 200 of the power tool is configured to shut down supply of power to the motor if the current draw exceeds the shutdown current threshold. In some examples, the electronic control module 200 of the power tool is configured to shut down supply of power to the motor if the current draw exceeds the shutdown current threshold for a given period of time, e.g., using a |^2*t function. In either example, the rapid rise in current at start-up due to the high power delivery of the high capacity battery pack 16c or 16d may result in frequent and inadvertent power tool shut-downs.

According to an embodiment of the invention, to overcome this problem, an improved speed ramp control scheme is provided using a variable cycle-by-cycle current limit (also referred to herein as a variable current clipping) applied to the electric current drawn by the motor from the power source.

Initially, reference is made to US Patent No. 10,411,558, for a description of cycle-by-cycle current limiting. In cycle-by-cycle current limiting, in an embodiment, the controller 232 monitors the instantaneous current passing from the power supply within a given PWM cycle, compares the measure of the instantaneous current to a current limit, and takes corrective action to reduce the current if the measure of instantaneous current exceeds the current limit. In an example, the controller 232 turns off the power switches of the power switch circuit 222 for the remainder of the present PWM cycle once the measure of the instantaneous current exceeds the current limit. At the next PWM cycle, the controller 232 resumes activating the power switch circuit 222 once again and repeats this process. In this manner, the controller 232 "clips" the current at the current limit over a multitude of consecutive PWM cycles.

In an embodiment, the improved speed ramp control scheme utilizes a variable current clipping implementation at power tool start-up to shape a current waveform for the high capacity battery pack 16c or 16d and the medium capacity battery pack 16b that is comparable to the current waveform for the low capacity battery pack 16a. Specifically, in the improved speed ramp control scheme, the cycle-by-cycle current limit is initially set to a baseline value (e.g., 40A) at tool start-up and gradually increased up to a final threshold (e.g., 85A) to shape a desired current waveform. Using this scheme, in an embodiment, the current waveform of power tool 10 exhibits a similar behavior regardless of the capacity of the battery pack 16 that it is coupled to. Importantly, when using the high capacity battery pack 16c or 16d, the current waveform obtained in this manner prevents a rapid current rise that exceeds the shutdown current threshold of the power tool 10, as shown in Fig. 12.

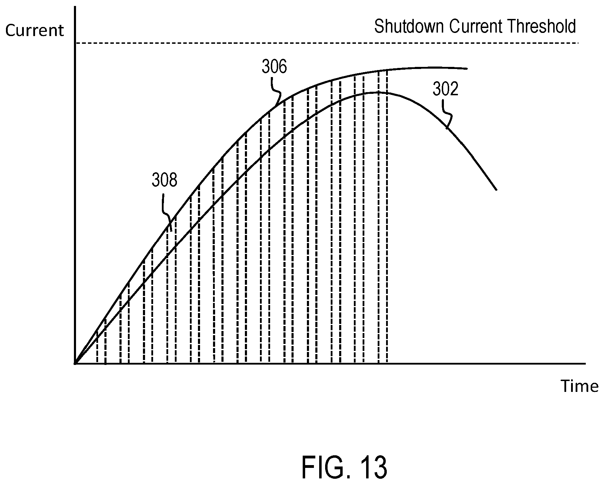

Fig. 13 depicts an improved current-time curve 306 of power tool 10 during the start-up period when powered by a high-capacity battery pack 16c or 16d using the improved speed ramp control scheme, according to an embodiment. In an embodiment, curve 306 is shaped by applying the variable cycle-by-cycle current limit as described above at consecutive intervals 308, starting from the baseline value and incrementing gradually. This ensures that the curve 306 does not reach the shutdown current threshold of the power tool 10. In an embodiment, the cycle-by-cycle current limit values at different intervals 308 may be preset to shape the curve 306 substantially similarly to curve 302, thus allowing the power tool 10 to exhibit substantially the same behavior during start-up regardless of the capacity of the battery pack 16 that it is coupled to. Alternatively, curve 306 may be shaped to allow a faster rise in current in comparison to curve 302, but a slower rise in current in comparison to curve 304 of Fig. 12.

The improved speed ramp control scheme described here may be applied in lieu of, or in addition to, PWM control at start-up. In an embodiment, at start-up, the controller 232 may set the PWM duty cycle to its maximum value (e.g., 100%) and rely exclusively on current clipping ramp-up for the speed ramp control. Alternatively, at start-up, the controller 232 may gradually ramp up the PWM duty cycle in tandem with current clipping.

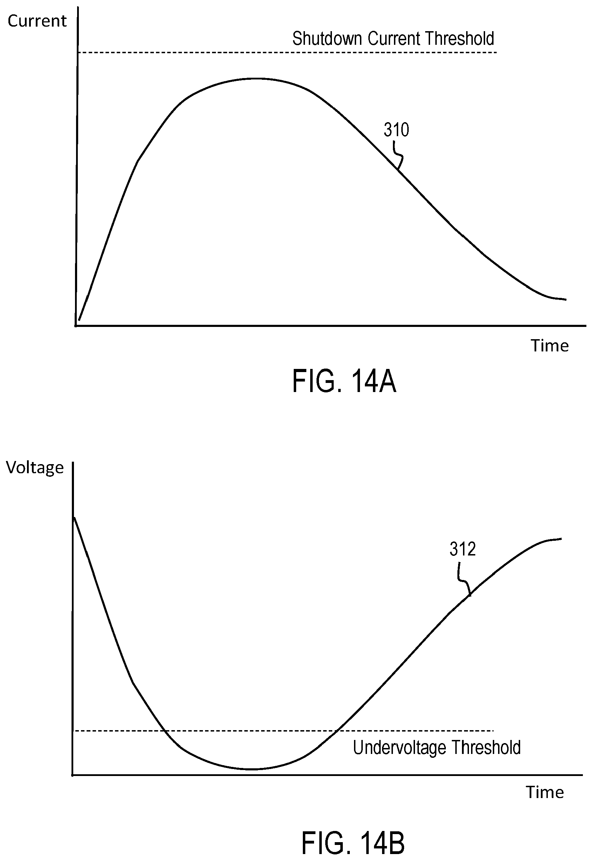

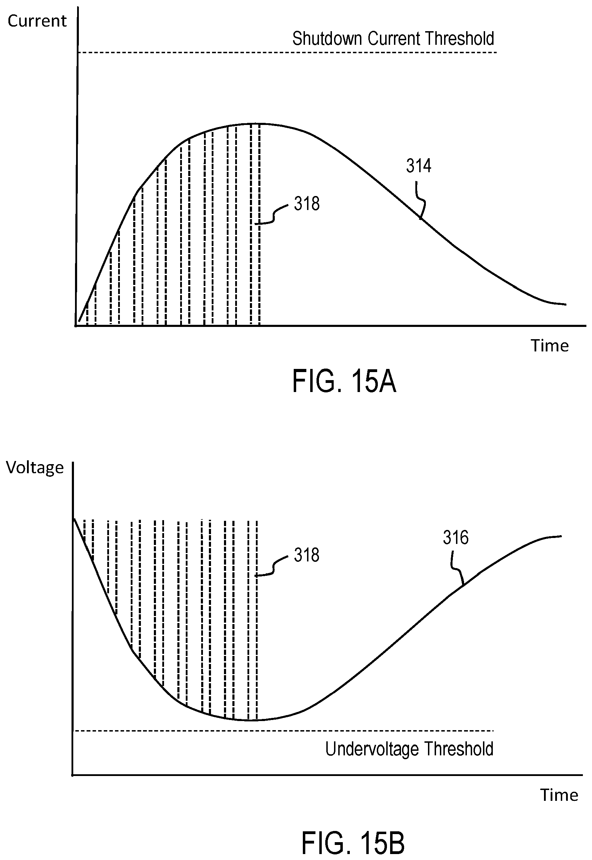

The improved speed ramp control scheme described here overcomes the problem that arises where a battery pack capacity exceeds the power capabilities of the power tool. Another problem seen in some power tools and battery packs is where the power tool requires more power that the battery pack is capable of supplying. This problem has been seen particularly in families of lower voltage (e.g., 12V max lithium-ion) battery packs and high torque power tools. This problem is explained with reference to Figs. 14A and 14B below, and the solution is discussed with reference to Figs. 15A and 15B.

Figs 14A and 14B respectively depict an exemplary current-time curve 310 and a corresponding exemplary voltage-time curve 312 of the power tool 10 during the start-up period when powered by a low-capacity (and in an example, low voltage) battery pack, according to an embodiment. In this example, the current required by the power tool, either due to the low impedance of the motor, high inertia of the transmission and/or the accessory, etc., is higher than the rated current capability of the battery pack. The high current draw at start-up can often cause the battery pack voltage to drop rapidly and fall below an undervoltage threshold of the battery pack. The undervoltage threshold is a voltage threshold below which the battery pack is designed to shut itself down or the power tool is configured to shut off supply of power from the battery pack, and it is designed to safeguard the battery cells. When the battery voltage falls below the undervoltage threshold, it causes inadvertent shutdown of the power tool during start-up.

Figs. 15A and 15B respectively depict an improved current-time curve 314 and a corresponding improved voltage-time curve 316 of the power tool 10 during the start-up period when powered by the low-capacity (and in an example, low voltage) battery pack using the improved speed ramp control scheme, according to an embodiment. In an embodiment, curve 314 is shaped by applying the variable cycle-by-cycle current limit as described above at consecutive intervals 318. This ensures that the current curve 314 does not exceed the current capability of the battery pack, and accordingly shapes the voltage curve 316 so it stays above the undervoltage threshold during start-up. In an embodiment, the cycle-by-cycle current limits may be set to shape the curves 314 and 316 such that the power tool exhibits substantially the same behavior during start-up regardless of the capacity of the battery pack 16 that it is coupled to.

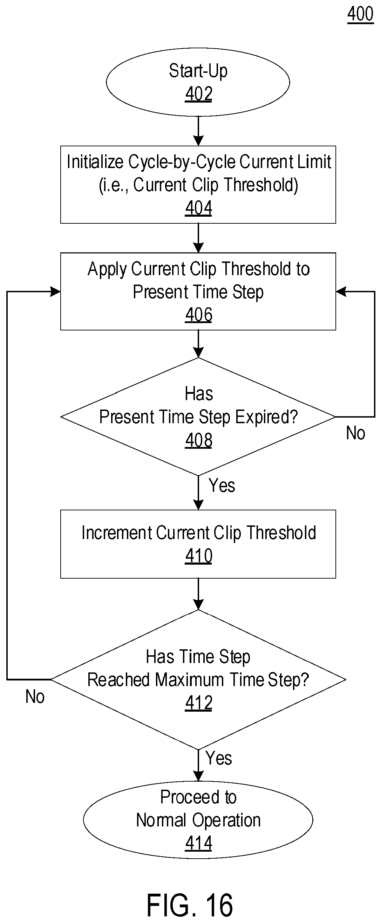

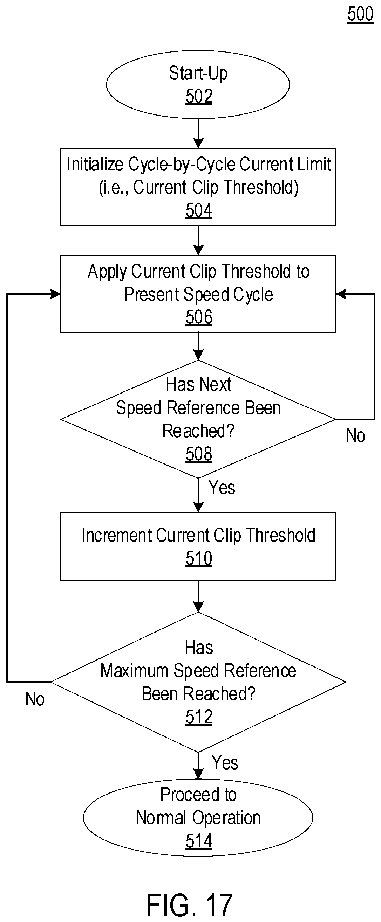

Various implementations of the speed ramp control scheme of the invention are described herein with reference to Figs. 16 and 17.

Fig. 16 depicts an exemplary flow diagram 400 for speed ramp control during the start-up period, according to an embodiment. In this embodiment, controller 232 initiates tool start-up initiates at step 402, and proceeds to initialize the cycle-by-cycle current limit (i.e., current clip threshold) to an initial value (e.g., 40A) at step 404. The controller 232 then applies the current clip threshold to limit the amount of current drawn from the battery pack within a present time step at step 406. The controller 232 determines if the present time step has expired at step 408. If so, the controller 232 increments the current clip threshold at step 410. The controller 232 determines if the time step has reached a maximum value at step 412. If not, the controller 232 repeats steps 406-412. Otherwise, the controller 232 terminates the start-up execution and proceeds to normal power tool operation at step 414.

Table 1 below is an example of how the controller 232 may be configured to set the current clip threshold values at discrete time steps. Alternatively, in an embodiment, the controller 232 may utilize a mathematical function to set the current clip threshold as a function of time at discrete time steps. In yet another embodiment, the controller 232 may increment the current clip threshold as a function of PWM cycles, e.g., every x PWM duty cycles.

**TABLE 1**

| 5ms/step | Current Clip Threshold |
|---|---|
| 1 | 40A |
| 2 | 45A |
| 3 | 50A |
| 4 | 55A |
| 5 | 60A |
| 6 | 65A |
| 7 | 70A |
| 8 | 75A |
| 9 | 80A |
| 10 | 85A |

Fig. 17 depicts an exemplary flow diagram 500 for speed ramp control during the start-up period, according to another embodiment. In this embodiment, current clip thresholds are incremented as a function of a speed-reference rather than time. Specifically, the current clip thresholds are set based on the detected output speed of the motor in real time and in closed-loop control, rather than in open-loop control with no reference to the output of the motor. In this embodiment, the controller 232 initiates tool start-up initiates at step 502, and proceeds to initialize the cycle-by-cycle current limit (i.e., current clip threshold) to an initial value (e.g., 40A) at step 504. The controller 232 then applies the current clip threshold to limit the amount of current drawn from the battery pack while monitoring the output speed of the motor 100 at step 506. The controller 232 determines if the output speed has reached a next speed reference at step 508. If so, the controller 232 increments the current clip threshold at step 510. The controller 232 determines if the output speed of the motor has reached a maximum reference value at step 512. If not, the controller 232 repeats steps 506-512. Otherwise, the controller 232 terminates the start-up execution and proceeds to normal power tool operation at step 514.

Table 2 below is an example of how the controller 232 may be configured to set the current clip threshold values at discrete speed reference points.

**TABLE 2**

| Reference Speed/RPM | Current Clip Threshold |
|---|---|
| 100 | 40A |
| 2000 | 45A |
| 3000 | 50A |
| 4000 | 55A |
| 6000 | 60A |
| 8000 | 65A |
| 10000 | 70A |
| 12000 | 75A |
| 14000 | 80A |
| 16000 | 85A |

While the above-described embodiments disclose discretely increasing the current clip threshold based on set time steps and reference speed, the current clip threshold may be set discretely based on other conditions or parameters. In an example, the controller may be configured to monitor and count the number of times the current clipping threshold is reached after the current clip threshold is set. Once the count reaches a threshold (e.g., 10), the current clipping threshold is set to the next value in the table (e.g., current clipping threshold is incremented from 45A to 50A if the current reaches 45A ten times within a predetermined amount of time).

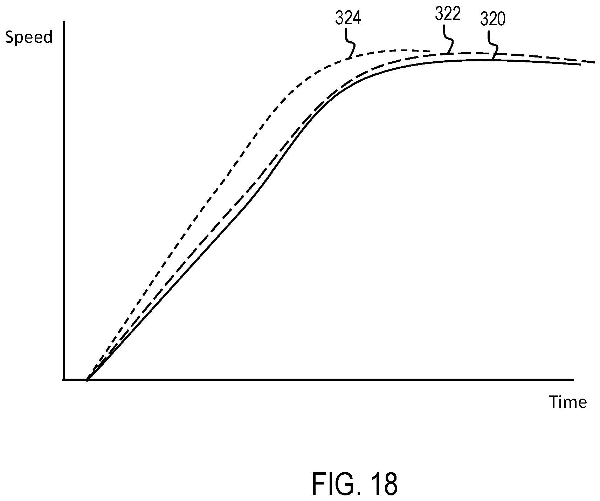

Fig. 18 depicts a speed-time diagram showing a speed curve 320 achieved using the improved speed ramp control scheme of the invention described above during the start-up period when using a high-capacity battery pack, according to an embodiment. By comparison, speed curve 322 shows the speed profile during start-up when using a low-capacity battery pack. Speed curve 324 shows the speed profile during start-up using the high-capacity battery pack using conventional speed ramp-up executions. As shown here, the speed ramp behaviors of high and low-capacity battery packs are significantly similar using the improved speed ramp control scheme of the invention.

While embodiments of the invention refer to cycle-by-cycle current limiting as an example of a current clipping implementation, it should be understood that other implementations of current clipping are within the scope of this disclosure and can be use in place of, or in combination with, cycle-by-cycle current limiting. An example of an alternative implementation is to disable PWM control of the motor (i.e., cut off power to the motor) for a predetermined time that is greater than one PWM clock cycle when a current clipping threshold is reached and resume power at the expiration of the predetermined time to maintain the current at a level near the current clipping threshold. This execution is described in detail in US Patent Publication No. 2022/0193868.

## Claims

1. A method of operating a power tool (10) having a motor (100) and a controller (232) during a start-up period of the power tool (10), the start-up period having a plurality of intervals, the power tool (10) receiving electric power from a removable battery pack (16), **characterized by** the method comprising:
initializing a current clipping threshold to a baseline value;
applying the current clipping threshold to the electrical current drawn by the power tool (10) from the battery pack (16) during a first interval of the plurality of intervals; and
gradually increasing the current clipping threshold over subsequent intervals of the plurality of intervals to control a ramp-up curve of the rotational speed of the motor (100).

2. The method of claim 1, wherein the power tool (10) is configured to exhibit a substantially similar speed ramp-up curve when powered by a first battery pack (16a) as it does when powered by a second battery pack (16b, 16c, 16d), wherein the second battery pack (16b, 16c, 16d) has a higher electrical capacity than the first battery pack (16a).

3. The method of claim 2, wherein the second battery pack (16b, 16c, 16d) has a higher number of parallel connections between its battery cells (50) than does the first battery pack (16a).

4. The method of any preceding claim, wherein current clipping threshold is incremented as a function of time.

5. The method of any of claims 1 to 3, wherein the current clipping threshold is incremented in closed-loop and as a function of the rotational speed of the motor (100).

6. The method of any preceding claim, wherein the current clipping threshold is controlled over the plurality of intervals such that a current-time curve of the electrical current does not exceed a shutdown current threshold of the power tool (10).

7. The method of any of claims 1 to 5, wherein the current clipping threshold is controlled over the plurality of intervals such that a voltage-time curve of an electric voltage of the battery pack (16) does not fall below an undervoltage threshold of the battery pack (16).

8. A power tool (10) capable of operating with a first battery pack (16a) or a second battery pack (16b, 16c, 16d) having a higher electrical capacity than the first battery pack (16a), the power tool (10) comprising:
a housing (12);
an electric motor (100) disposed within the housing (12);
a battery receiving portion (15) on the housing (12) configured to removably receive one of the first battery pack (16a) or the second battery pack (16b, 16c, 16d); and
an inverter circuit disposed between the battery receiving portion (15) and the electric motor (100); and
a controller (232) configured to control a switching operation of the inverter circuit to control supply of electric power to the electric motor (100), **characterized in that**, during a power tool start-up period having a plurality of intervals, the controller (232) is configured to:
initialize a current clipping threshold to a baseline value;
apply the current clipping threshold to the electrical current drawn by the power tool (10) from the battery pack (16) during a first interval of the plurality of intervals; and
gradually increase the current clipping threshold over subsequent intervals of the plurality of intervals to control a ramp-up curve of the rotational speed of the motor (100).

9. The power tool (10) of claim 8, wherein the power tool (10) is configured to exhibit a substantially similar speed ramp-up curve when powered by the first battery pack (16a) as it does when powered by the second battery pack (16b, 16c, 16d).

10. The power tool (10) of claim 9, wherein the second battery pack (16b, 16c, 16d) has a higher number of parallel connections between its battery cells (50) than does the first battery pack (16a).

11. The power tool (10) of any of claims 8 to 10, wherein current clipping threshold is incremented as a function of time.

12. The power tool (10) of any of claims 8 to 10, wherein the current clipping threshold is incremented in closed-loop and as a function of the rotational speed of the motor (100).

13. The power tool (10) of any of claims 8 to 12, wherein the controller (232) is configured to control the current clipping threshold over the plurality of intervals such that a current-time curve of the electrical current does not exceed a shutdown current threshold of the power tool (10).

14. The power tool (10) of any of claims 8 to 12, wherein the controller (232) is configured to control the current clipping threshold over the plurality of intervals such that a voltage-time curve of an electric voltage of the battery pack (16) does not fall below an undervoltage threshold of the battery pack (16).

15. A power tool system comprising: the power tool (10) according to any of claims 8 to 14; a first battery pack (16a); and a second battery pack (16b, 16c, 16d) having a higher electrical capacity than the first battery pack (16a).

## Patentansprüche

1. Verfahren zum Betreiben eines Elektrowerkzeugs (10), das einen Motor (100) und eine Steuereinheit (232) aufweist, während einer Startphase des Elektrowerkzeugs (10), wobei die Startphase eine Vielzahl von Intervallen aufweist, wobei das Elektrowerkzeug (10) elektrische Energie von einem entfernbaren Batteriesatz (16) erhält, **dadurch gekennzeichnet, dass** das Verfahren umfasst:
Initialisieren eines Strombegrenzungsschwellenwerts auf einen Basislinienwert;
Anwenden des Strombegrenzungsschwellenwerts auf den elektrischen Strom, der vom Elektrowerkzeug (10) während eines ersten Intervalls der Vielzahl von Intervallen aus dem Batteriesatz (16) gezogen wird; und
allmähliches Erhöhen des Strombegrenzungsschwellenwerts über aufeinanderfolgende Intervalle der Vielzahl von Intervallen, um eine Geschwindigkeitsanstiegskurve der Drehzahl des Motors (100) zu steuern.

2. Verfahren nach Anspruch 1, wobei das Elektrowerkzeug (10) konfiguriert ist, um bei einer Stromversorgung durch einen ersten Batteriesatz (16a) eine im Wesentlichen ähnliche Geschwindigkeitsanstiegskurve aufzuweisen wie bei einer Stromversorgung durch einen zweiten Batteriesatz (16b, 16c, 16d), wobei der zweite Batteriesatz (16b, 16c, 16d) eine höhere elektrische Kapazität aufweist als der erste Batteriesatz (16a).

3. Verfahren nach Anspruch 2, wobei der zweite Batteriesatz (16b, 16c, 16d) eine höhere Anzahl paralleler Verbindungen zwischen seinen Batteriezellen (50) aufweist als der erste Batteriesatz (16a).

4. Verfahren nach einem vorstehenden Anspruch, wobei der Strombegrenzungsschwellenwert als Funktion der Zeit erhöht wird.

5. Verfahren nach einem der Ansprüche 1 bis 3, wobei der Strombegrenzungsschwellenwert im geschlossenen Regelkreis und als Funktion der Drehzahl des Motors (100) erhöht wird.

6. Verfahren nach einem vorstehenden Anspruch, wobei der Strombegrenzungsschwellenwert über die Vielzahl von Intervallen so gesteuert wird, dass eine Strom-Zeit-Kurve des elektrischen Stroms einen Abschaltstromschwellenwert des Elektrowerkzeugs (10) nicht überschreitet.

7. Verfahren nach einem der Ansprüche 1 bis 5, wobei der Strombegrenzungsschwellenwert über die Vielzahl von Intervallen so gesteuert wird, dass eine Spannungs-Zeit-Kurve einer elektrischen Spannung des Batteriesatzes (16) nicht unter einen Unterspannungsschwellenwert des Batteriesatzes (16) fällt.

8. Elektrowerkzeug (10), das mit einem ersten Batteriesatz (16a) oder einem zweiten Batteriesatz (16b, 16c, 16d) betrieben werden kann, der eine höhere elektrische Kapazität als der erste Batteriesatz (16a) aufweist, wobei das Elektrowerkzeug (10) Folgendes umfasst:
ein Gehäuse (12);
einen Elektromotor (100), der im Gehäuse (12) angeordnet ist;
einen Batterieaufnahmeabschnitt (15) am Gehäuse (12), der konfiguriert ist, um einen von dem ersten Batteriesatz (16a) oder dem zweiten Batteriesatz (16b, 16c, 16d) entfernbar aufzunehmen; und
eine Wechselrichterschaltung, die zwischen dem Batterieaufnahmeabschnitt (15) und dem Elektromotor (100) angeordnet ist; und
eine Steuereinheit (232), die konfiguriert ist, um einen Schaltvorgang der Wechselrichterschaltung zu steuern, um die Zufuhr von elektrischer Energie zum Elektromotor (100) zu steuern, **dadurch gekennzeichnet, dass** die Steuereinheit (232) während einer Startphase eines Elektrowerkzeugs, die eine Vielzahl von Intervallen aufweist, konfiguriert ist zum:
Initialisieren eines Strombegrenzungsschwellenwerts auf einen Basislinienwert;
Anwenden des Strombegrenzungsschwellenwerts auf den elektrischen Strom, der vom Elektrowerkzeug (10) während eines ersten Intervalls der Vielzahl von Intervallen aus dem Batteriesatz (16) gezogen wird; und
allmähliches Erhöhen des Strombegrenzungsschwellenwerts über aufeinanderfolgende Intervalle der Vielzahl von Intervallen, um eine Geschwindigkeitsanstiegskurve der Drehzahl des Motors (100) zu steuern.

9. Elektrowerkzeug (10) nach Anspruch 8, wobei das Elektrowerkzeug (10) konfiguriert ist, um bei einer Stromversorgung durch den ersten Batteriesatz (16a) eine im Wesentlichen ähnliche Geschwindigkeitsanstiegskurve aufzuweisen wie bei einer Stromversorgung durch den zweiten Batteriesatz (16b, 16c, 16d).

10. Elektrowerkzeug (10) nach Anspruch 9, wobei der zweite Batteriesatz (16b, 16c, 16d) eine höhere Anzahl paralleler Verbindungen zwischen seinen Batteriezellen (50) aufweist als der erste Batteriesatz (16a).

11. Elektrowerkzeug (10) nach einem der Ansprüche 8 bis 10, wobei der Strombegrenzungsschwellenwert als Funktion der Zeit erhöht wird.

12. Elektrowerkzeug (10) nach einem der Ansprüche 8 bis 10, wobei der Strombegrenzungsschwellenwert im geschlossenen Regelkreis und als Funktion der Drehzahl des Motors (100) erhöht wird.

13. Elektrowerkzeug (10) nach einem der Ansprüche 8 bis 12, wobei die Steuereinheit (232) konfiguriert ist, um den Strombegrenzungsschwellenwert über die Vielzahl von Intervallen so zu steuern, dass eine Strom-Zeit-Kurve des elektrischen Stroms einen Abschaltstromschwellenwert des Elektrowerkzeugs (10) nicht überschreitet.

14. Elektrowerkzeug (10) nach einem der Ansprüche 8 bis 12, wobei die Steuereinheit (232) konfiguriert ist, um den Strombegrenzungsschwellenwert über die Vielzahl von Intervallen so zu steuern, dass eine Spannungs-Zeit-Kurve einer elektrischen Spannung des Batteriesatzes (16) nicht unter einen Unterspannungsschwellenwert des Batteriesatzes (16) fällt.

15. Elektrowerkzeugsystem, umfassend: das Elektrowerkzeug (10) nach einem der Ansprüche 8 bis 14; einen ersten Batteriesatz (16a); und einen zweiten Batteriesatz (16b, 16c, 16d), der eine höhere elektrische Kapazität als der erste Batteriesatz (16a) aufweist.

## Revendications

1. Procédé de fonctionnement d'un outil électrique (10) équipé d'un moteur (100) et d'un dispositif de commande (232) pendant une période de démarrage de l'outil électrique, la période de démarrage présentant une pluralité d'intervalles, l'outil électrique (10) recevant de l'énergie en provenance d'un bloc-batterie amovible (16), **caractérisé par** le procédé est comprenant :
l'initialisation d'un seuil d'écrêtage de courant à une valeur de base ;
l'application du seuil d'écrêtage de courant au courant électrique consommé par l'outil électrique (10) à partir du bloc-batterie (16) pendant un premier intervalle de la pluralité d'intervalles ; et
l'augmentation progressive du seuil d'écrêtage de courant sur des intervalles ultérieurs de la pluralité d'intervalles pour commander une courbe de montée de la vitesse de rotation du moteur (100).

2. Procédé selon la revendication 1, dans lequel l'outil électrique (10) est configuré pour présenter une courbe de montée en vitesse sensiblement similaire lorsqu'il est alimenté par un premier bloc-batterie (16a) que lorsqu'il est alimenté par un second bloc-batterie (16b, 16c, 16d), dans lequel le second bloc-batterie (16b, 16c, 16d) présente une capacité électrique plus élevée que celle du premier bloc-batterie (16a).

3. Procédé selon la revendication 2, dans lequel le second bloc-batterie (16b, 16c, 16d) présente un nombre plus élevé de connexions parallèles entre ses cellules de batterie (50) que le premier bloc-batterie (16a).

4. Procédé selon une quelconque revendication précédente, dans lequel le seuil d'écrêtage de courant est incrémenté en fonction du temps.

5. Procédé selon l'une quelconque des revendications 1 à 3, dans lequel le seuil d'écrêtage de courant est incrémenté en boucle fermée et en fonction de la vitesse de rotation du moteur (100).

6. Procédé selon une quelconque revendication précédente, dans lequel le seuil d'écrêtage de courant est commandé sur la pluralité d'intervalles de telle sorte qu'une courbe courant-temps du courant électrique ne dépasse pas un seuil de courant d'arrêt de l'outil électrique (10).

7. Procédé selon l'une quelconque des revendications 1 à 5, dans lequel le seuil d'écrêtage de courant est commandé sur la pluralité d'intervalles de telle sorte qu'une courbe tension-temps d'une tension électrique du bloc-batterie (16) ne tombe pas en dessous d'un seuil de sous-tension du bloc-batterie (16).

8. Outil électrique (10) pouvant fonctionner avec un premier bloc-batterie (16a) ou un second bloc-batterie (16b, 16c, 16d) présentant une capacité électrique plus élevée que celle du premier bloc-batterie (16a), l'outil électrique (10) comprenant :
un boîtier (12) ;
un moteur électrique (100) disposé dans le boîtier (12) ;
une partie de réception de batterie (15) sur le boîtier (12) configurée pour recevoir de manière amovible l'un du premier bloc-batterie (16a) ou du second bloc-batterie (16b, 16c, 16d) ; et
un circuit onduleur disposé entre la partie de réception de batterie (15) et le moteur électrique (100) ; et
un dispositif de commande (232) configuré pour commander une opération de commutation du circuit onduleur pour commander l'alimentation électrique du moteur électrique (100), **caractérisé en ce que**, pendant une période de démarrage d'outil électrique présentant une pluralité d'intervalles, le dispositif de commande (232) est configuré pour :
initialiser un seuil d'écrêtage de courant à une valeur de base ;
appliquer le seuil d'écrêtage de courant au courant électrique consommé par l'outil électrique (10) à partir du bloc-batterie (16) pendant un premier intervalle de la pluralité d'intervalles ; et
augmenter progressivement le seuil d'écrêtage de courant sur des intervalles ultérieurs de la pluralité d'intervalles pour commander une courbe de montée de la vitesse de rotation du moteur (100).

9. Outil électrique (10) selon la revendication 8, dans lequel l'outil électrique (10) est configuré pour présenter une courbe de montée en vitesse sensiblement similaire lorsqu'il est alimenté par le premier bloc-batterie (16a) que lorsqu'il est alimenté par le second bloc-batterie (16b, 16c, 16d).

10. Outil électrique (10) selon la revendication 9, dans lequel le second bloc-batterie (16b, 16c, 16d) présente un nombre plus élevé de connexions parallèles entre ses cellules de batterie (50) que le premier bloc-batterie (16a).

11. Outil électrique (10) selon l'une quelconque des revendications 8 à 10, dans lequel le seuil d'écrêtage de courant est incrémenté en fonction du temps.

12. Outil électrique (10) selon l'une quelconque des revendications 8 à 10, dans lequel le seuil d'écrêtage de courant est incrémenté en boucle fermée et en fonction de la vitesse de rotation du moteur (100).

13. Outil électrique (10) selon l'une quelconque des revendications 8 à 12, dans lequel le dispositif de commande (232) est configuré pour commander le seuil d'écrêtage de courant sur la pluralité d'intervalles de telle sorte qu'une courbe courant-temps du courant électrique ne dépasse pas un seuil de courant d'arrêt de l'outil électrique (10).

14. Outil électrique (10) selon l'une quelconque des revendications 8 à 12, dans lequel le dispositif de commande (232) est configuré pour commander le seuil d'écrêtage de courant sur la pluralité d'intervalles de telle sorte qu'une courbe tension-temps d'une tension électrique du bloc-batterie (16) ne tombe pas en dessous d'un seuil de sous-tension du bloc-batterie (16).

15. Système d'outil électrique comprenant : l'outil électrique (10) selon l'une quelconque des revendications 8 à 14 ; un premier bloc-batterie (16a) ; et un second bloc-batterie (16b, 16c, 16d) présentant une capacité électrique plus élevée que celle du premier bloc-batterie (16a).
